# EUROPEAN PATENT APPLICATION

(11) **EP 1 524 787 A2**
(43) Date of publication of application: **20.04.2005**
(21) Application number: 04001779.0
(22) Date of filing: 28.01.2004
(51) Int. Cl.: H04H 1/00

(54) **Transport stream, apparatus and method for providing value added service while channels are being changed in a digital multimedia broadcasting system**

(30) Priority: 16.10.2003 KR 2003072227
(71) Applicant: Samsung Electronics Co., Ltd., Suwon-si, Gyeonggi-do (KR)
(72) Inventor: Lee, Sang-Hyuk c/o Samsung Electronics Co., Ltd., Suwon-si Feonggi-do (KR); Lee, Kyung-Ha c/o Samsung Electronics Co., Ltd., Suwon-si Feonggi-do (KR)
(74) Representative: Lang, Johannes, Dipl.-Ing.

(57) **Abstract**

A transport stream, apparatus and method provide a value added service during a channel changing period in a digital multimedia broadcasting system, and a broadcast receiver. The transport stream includes program data configured by one or more broadcast programs and additional information corresponding to the broadcast programs; program map tables (PMTs) having detailed information of the broadcast programs and service information of the additional information; and a program association table (PAT) having packet identifiers of the PMTs corresponding to the broadcast programs.

## Description

### BACKGROUND OF THE INVENTION

### 1. Field of the Invention

The present invention relates to a digital multimedia broadcasting system, and more particularly to a transport stream, apparatus and method for providing a value added service during a channel changing period, and a broadcast receiver therefor.

### 2. Description of the Related Art

With the development of new data compression technologies and communication technologies for audio and video, etc., high-quality audio and video services can now be provided by mobile multimedia broadcasting anywhere and anytime. Mobile multimedia broadcasting includes digital multimedia broadcasting (DMB) or digital audio broadcasting (DAB), and the like. A mobile multimedia broadcasting system provides broadcast information including various contents such as music, text and moving pictures allowing mobile terminals, fixed terminals and portable terminals to receive the provided broadcast information.

A digital broadcasting system, is different from an analog broadcasting system. The digital broadcasting system acquires channel information after the channel is changed and decodes the acquired channel information. As described above, the time to acquire the channel information is a part of the digital broadcasting system. The time to acquire the channel information can be a major problem in a DMB-based standard system-E that performs a broadcasting operation on the basis of a code division multiplex (CDM) scheme, because the system-E is exposed to an environment capable of inducing errors on the system during mobile reception.

As a method for transmitting a broadcast signal, the system-E adopts the CDM scheme and simultaneously performs an interleaving process for data transmission allowing mobile terminals to receive high-quality video or audio data. A receiver must perform a deinterleaving process corresponding to the interleaving process for the transmission data. Since a predetermined time is required to perform the deinterleaving process, a viewer must wait for the channel information to be processed for video or audio of a newly changed channel to be reproduced when the viewer changes channels. Thus, the viewer may feel frustrated while waiting for the channel information to be processed. A service provider can adjust the time period required for performing the deinterleaving process based on the mobile reception environment by using various data. Based on a field test, approximately 6 seconds are required for the channel information to be processed after a channel is changed in the conventional system-E.

### SUMMARY OF THE INVENTION

Therefore, the present invention has been made in view of the above problems, and it is one object of the present invention to provide a transport stream, apparatus, method and broadcast receiver, which can allow a service provider to provide a value added service during a relatively long channel processing time after a channel has been changed in a digital multimedia broadcasting system.

It is another object of the present invention to provide a transport stream, apparatus, method and broadcasting receiver, which can allow a service provider to provide additional information associated with a channel that a viewer has previously viewed and heard, during a relatively long channel processing time allowing the viewer to conveniently view and hear digital multimedia broadcast and allowing the service provider to generate a high profit by providing additional information.

In accordance with an aspect of the present invention, the above and other objects can be substantially accomplished by a transport stream which provides a value added service during channel processing in a digital multimedia broadcasting system. The transport stream comprises program data configured by one or more broadcast programs and additional information corresponding to the broadcast programs; program map tables (PMTs) having detailed information of the broadcast programs and service information of the additional information; and a program association table (PAT) having packet identifiers of the PMTs corresponding to the broadcast programs.

In accordance with a second aspect of the present invention, the above and other objects can be substantially accomplished by a transport stream which provides a value added service during channel processing in a digital multimedia broadcasting system. The transport stream comprises additional information corresponding to one or more broadcast programs; a first program map table (PMT) having detailed information of the broadcast programs; a second PMT having service information of the additional information; and a program association table (PAT) having packet identifiers of the first and second PMTs.

In accordance with a third aspect of the present invention, the above and other objects can be substantially accomplished by a digital multimedia broadcasting receiver equipped with a display unit for receiving and displaying broadcast. The digital multimedia broadcasting receiver comprises means for detecting service information of additional information from a received broadcast signal; a memory for storing the additional information according to the detected service information; user input means for allowing an input request for a channel changing operation; and a controller for recognizing the request for the channel changing operation, and displaying on a display unit the additional information stored in the memory until the channel changing operation is complete.

In accordance with a fourth aspect of the present invention, the above and other objects can be substantially accomplished by a method for providing a value added service in a receiver in a digital multimedia broadcasting system that extracts additional information from a received broadcast signal and stores the extracted additional information in a memory provided in the system. The method comprises determining whether an input request for a channel changing operation has occurred; if the input request for the channel changing operation has occurred, initiating changing a current channel to a selected channel and displaying the stored additional information; and determining whether the channel changing operation to the selected channel has been completed, and stopping the displaying of the additional information if the channel changing operation has been completed.

### BRIEF DESCRIPTION OF THE DRAWINGS

The above and other objects, features and other advantages of the present invention will be more clearly understood from the following detailed description taken in conjunction with the accompanying drawings, in which:
- FIGS. 1A and 1B: are block diagrams illustrating formats of transport streams in accordance with a first embodiment of the present invention;
- FIG. 2: is a block diagram illustrating an apparatus for transmitting a transport stream for digital multimedia broadcast in accordance with the first embodiment of the present invention;
- FIG. 3: is a block diagram illustrating a format of a transport stream in accordance with the second embodiment of the present invention;
- FIG. 4: is a block diagram illustrating an apparatus for transmitting a transport stream for digital multimedia broadcast in accordance with the second embodiment of the present invention;
- FIG. 5: is a block diagram illustrating a digital multimedia broad-casting receiver in accordance with an embodiment of the present invention;
- FIG. 6: is a flow chart illustrating a method for enabling the digital multimedia broadcasting receiver to receive and store additional information along with a broadcast program in accordance with the first embodiment of the present invention;
- FIG. 7: is a flow chart illustrating a method for enabling the digital multimedia broadcasting receiver to receive and store additional information along with a broadcast program in accordance with the second embodiment of the present invention; and
- FIG. 8: is a flow chart illustrating a method for displaying additional information in accordance with a third embodiment of the present invention.

### DETAILED DESCRIPTION OF THE PREFERRED EMBODIMENTS

Several embodiments of the present invention will be described in detail with reference to the accompanying drawings. In the drawings, the same or similar elements are denoted by the same reference numerals. In the following description, a variety of specific elements comprising elements of various circuits are shown. The description of such elements is provided as an example. Those skilled in the art will appreciate that the embodiments of the present invention can be implemented without using the specific elements cited. Also, in the following description, a detailed description of known functions and configurations incorporated herein will be omitted for conciseness.

The configuration of the present invention can be implemented by hardware based upon a conventional system-E. Accordingly, a description of the embodiments of the present invention will be described using the system-E. It should be noted that the embodiments of the present invention are applicable to any system in which a channel changing period is present.

It is assumed that a mobile multimedia broadcasting system multiplexes audio, video and text data according to the Moving Picture Experts Group 2 Transport Stream (MPEG2-TS) standard and then transmits the multiplexed data.

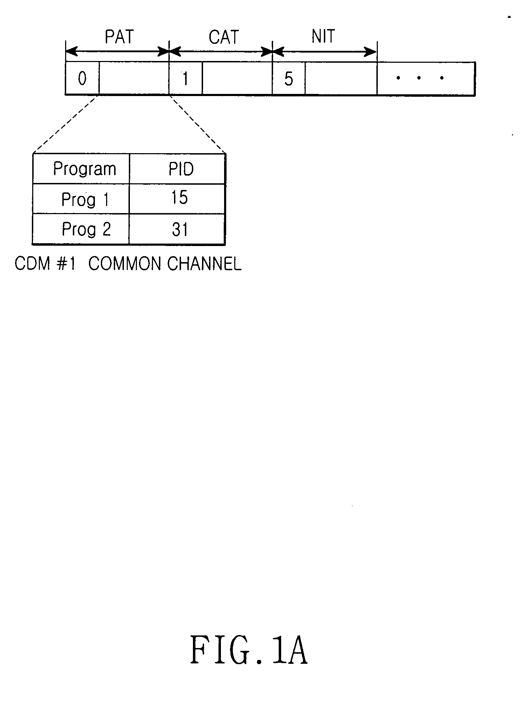

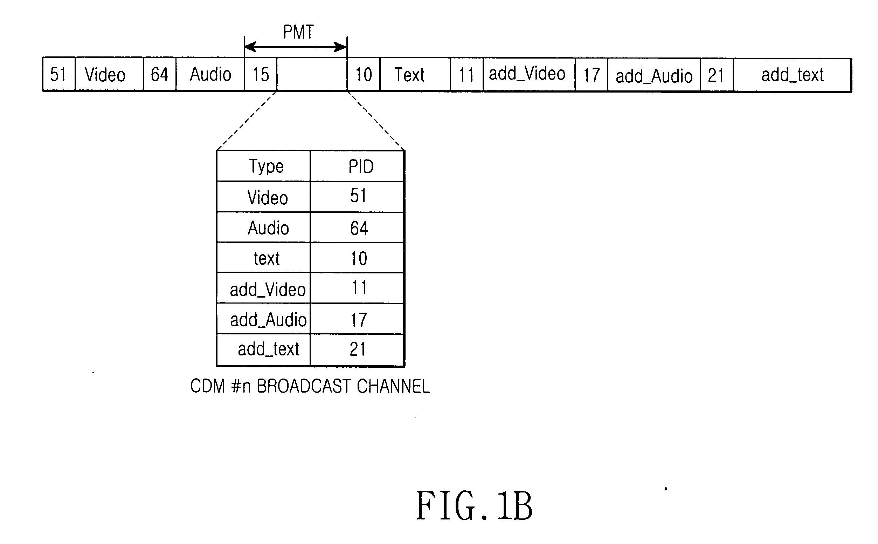

FIGS. 1A and 1B are block diagrams illustrating formats of transport streams in accordance with a first embodiment of the present invention. However, prior to discussing FIGS. 1A and 1B a brief description of a transport stream will be provided.

The transport stream includes a plurality of transport stream packets. Each transport stream packet includes a header and a payload. The header includes packet identification (PID) information. For convenience, in the specification, it is assumed that the header includes only the PID information.

Since the transport stream can transmit a plurality of programs, it must define the relationship between the programs included in the transport stream and program elements such as video or audio data comprising the programs. The relationship can be expressed using a predetermined table. The table includes information defined as program specific information (PSI). The PSI comprises four types of tables including a program association table (PAT), a program map table (PMT), a conditional access table (CAT) and a network information table (NIT).

The PMT contains PID numbers associated with video, audio and text data-packets included in a corresponding program. Furthermore, PID numbers associated with additional information of a corresponding broadcast program are designated in the PMT. Program data associated with PID numbers of corresponding programs can be identified by referring to code division multiplex (CDM) channel information transmitted through a pilot channel.

FIG. 1A shows the format of a common channel having a program association table (PAT). In the specification, it is assumed that the PAT is transmitted through the common channel. However, it should be noted that the embodiments of the present invention can also be practiced when the program data to be broadcast is transmitted through a broadcast channel along with the PAT. A PID number of the PAT is typically zero, and the PAT defines the PID numbers of PMTs corresponding to program numbers, etc.

Referring to FIG. 1A, it is assumed that the PID numbers of first and second programs Prog 1 and Prog 2 are defined as "15" and "31" in the PAT, respectively.

FIG. 1B shows the format of a broadcast channel having a program map table (PMT) and broadcast program data. Referring to FIG. 1B, PMT information includes broadcast information and additional information. For example, the PID numbers "51", "64" and "10" indicate transport stream packets associated with video, audio and text comprising the first program Prog. 1. Furthermore, the PID numbers "11", "17" and "21" indicate transport stream packets associated with video-related additional information e.g., add_video, audio-related additional information, e.g., add_audio and text-related additional information e.g., add_text that correspond to the first program Prog. 1.

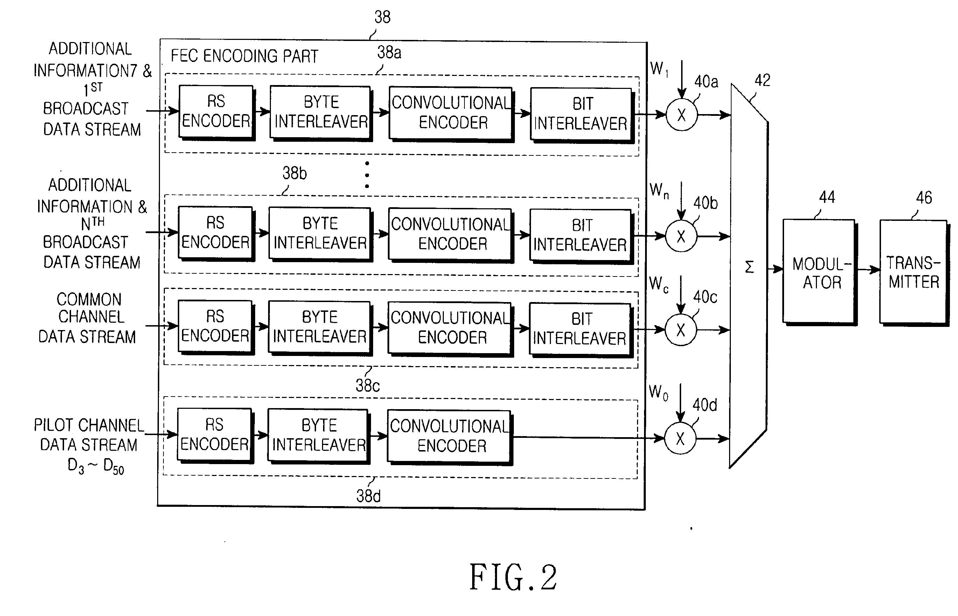

FIG. 2 is a block diagram illustrating an apparatus for transmitting a transport stream for digital multimedia broadcast in accordance with the first embodiment of the present invention.

First to n-th broadcast data streams having a plurality of broadcast programs are input into forward error correction (FEC) encoders 38a and 38b shown in FIG. 2. The broadcast data streams further include additional information, respectively. Furthermore, common channel data having program specific information (PSI) and pilot channel data are input into FEC encoders 38c and 38d, respectively.

In an FEC encoding part 38, each Reed-Solomon (RS) encoder performs an RS coding operation for each data stream, and each byte interleaver performs a byte interleaving operation for an output of the RS encoder on a byte-by-byte basis, such that a sequence of data is changed and arranged. Each convolutional encoder performs a convolutional coding operation for the byte-interleaved data. Each bit interleaver performs a bit interleaving operation for other data rather than the pilot channel data on a bit-by-bit basis, such that a sequence of data is changed and arranged.

A plurality of program data pieces output from the FEC encoding part 38 are input into spreading modulators 40a to 40d. The spreading modulators 40a to 40d perform spreading modulation operations for the program data by using different spread codes. Each of the spread codes is assigned to each channel and can be a Walsh code, for example.

A combiner 42 integrates transport packets based upon the spreading modulation operations performed by the spreading modulators 40a to 40d into a single CDM broadcast signal. A modulator 44 modulates the CDM broadcast signal on the basis of a digital modulation scheme such as quadrature phase shift keying (QPSK) or quadrature amplitude modulation (QAM). A transmitter 46 converts the modulated broadcast signal into a radio frequency (RF) signal and then amplifies the RF signal according to a transmission power level to transmit the amplified RF signal through an antenna (not shown).

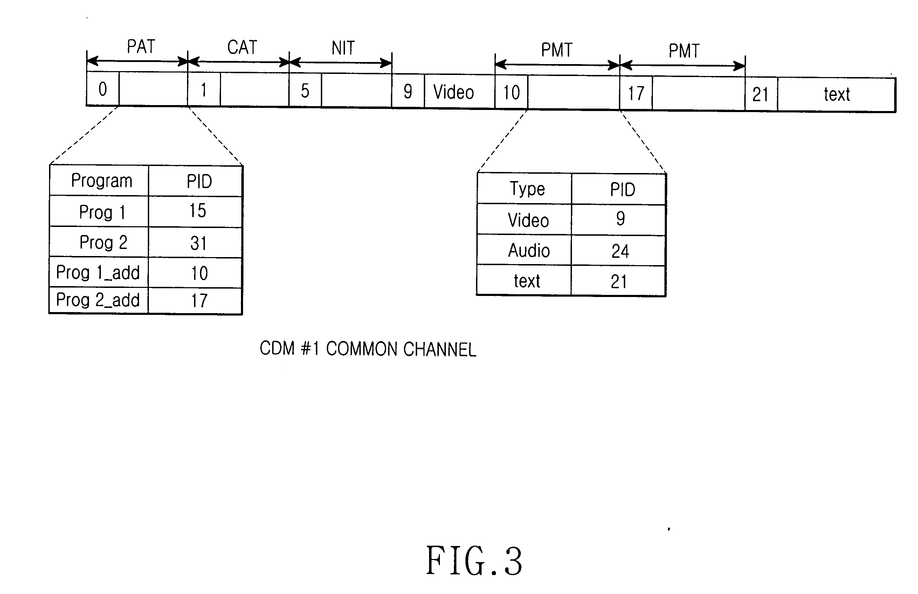

FIG. 3 is a block diagram illustrating the format of a transport stream in accordance with the second embodiment of the present invention. The transport stream shown in FIG. 3 is transmitted through a common channel, in a different manner than the transport streams shown in FIGS. 1A and 1B.

Referring to FIG. 3, packet identification (PID) numbers of two programs Prog 1 and Prog 2 and two additional information items Prog 1_add and Prog 2_add are defined as "15", "31", "10" and "17" in a program association table (PAT), respectively. The two programs Prog 1 and Prog 2 are transmitted through CDM broadcast channels rather than a CDM#1 common channel and a pilot channel, while the additional information is transmitted through the CDM#1 common channel. Each CDM broadcast channel can be identified by referring to channel configuration information of the pilot channel.

In accordance with the second embodiment of the present invention, the additional information is transmitted through the common channel that is periodically checked irrespective of the broadcast reception, and a terminal maps corresponding information to each program to store a result of the mapping. The second embodiment is different from the first embodiment in that the second embodiment can use additional information to be displayed when a channel is being changed as information associated with a channel program for display after the channel is changed. Similar to the first embodiment, the second embodiment also can comprise additional information relating to a channel broadcast after the channel has been changed. When a time period required for receiving the broadcast service is sufficient and a time period for storing the additional information by checking the common channel is appropriately adjusted, the second embodiment of the present invention, does not need to extract and store additional information from broadcast channel programs during the time the channel is being changed within a short time, such that additional information appropriate for each channel program can be appropriately provided. In the second embodiment of the present invention, only additional information corresponding to a channel to be viewed is extracted and stored. Of course, when the time period for storing additional information extracted from the common channel is insufficient in the second embodiment of the present invention, the second embodiment is implemented to allow the previously stored additional information to be displayed and provided while the channel is being changed as in the first embodiment. When only additional information of a corresponding program is stored in the second embodiment of the present invention, the second embodiment uses the same amount of memory as the first embodiment.

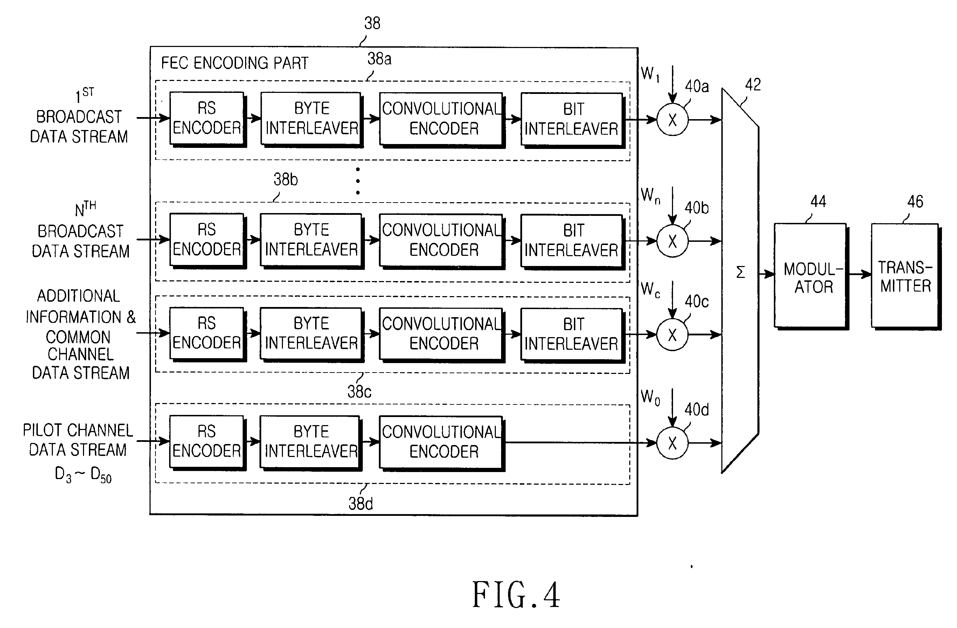

FIG. 4 is a block diagram illustrating an apparatus for transmitting a transport stream for digital multimedia broadcast in accordance with the second embodiment of the present invention.

The apparatus shown in FIG. 4 is different from the apparatus shown in FIG. 2 in that the common channel transmits additional information produced by the apparatus shown in FIG. 4. Thus, the input signal is different. However, the common elements shown in FIG. 4 operate substantially the same as those shown in FIG. 2. Therefore, a description of the common elements shown is omitted.

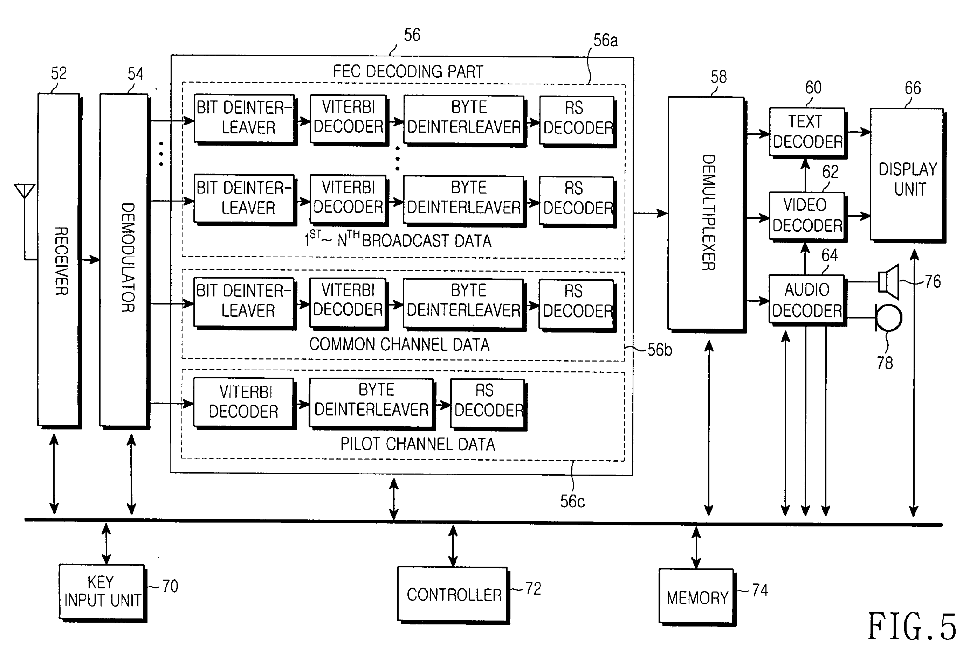

FIG. 5 is a block diagram illustrating a digital multimedia broadcasting receiver in accordance with an embodiment of the present invention.

A receiver 52 receives digital multimedia broadcast channel signals, performs low-noise amplification operations for the received signals, and converts results of the low-noise amplification operations into intermediate frequency (IF) signals through a frequency conversion operation. The demodulator 54 performs a CDM demodulation operation for the IF signals and performs a spectrum despreading operation for a result of the CDM demodulation operation by using a spread code corresponding to a channel selected by a user. Transport packets output from the demodulator 54 correspond to a transport stream of the selected channel. A forward error correction (FEC) decoding part 56 corrects an error due to noise and interference incurred during the transmission and performs a decoding operation.

A demultiplexer 58 receives PID information from a controller 72, extracts desired transport stream packets from the decoded transport stream using the PID information, and separates audio, video and text data packets. The audio, video and text data packets separated by the demultiplexer 58 are input into an audio decoder 64, a video decoder 62 and a text decoder 60. The audio decoder 64 decodes a compressed audio data packet and converts a result of the decoding into an analog signal by means of a digital/analog (D/A) converter (not shown) so that a result of the conversion can be output through a speaker 76. The video decoder 62 decodes a compressed video data packet and converts a result of the decoding into a format appropriate for a display unit 66 by means of a video processor (not shown) so that a result of the conversion can be output through the display unit 66. The text decoder 60 decodes a compressed text data packet so that a result of the decoding can be output through the display unit 66.

In accordance with the embodiment of the present invention, the demultiplexer 58 separates the transport stream packets having additional information by using the PID information provided from the controller 72. The separated transport stream packets are stored in a memory 74.

The controller 72 controls an overall operation of the digital multimedia broadcasting receiver. Furthermore, the controller 72 controls a broadcast channel changing operation in response to a key input from the user, and extracts, from the memory 74, additional information to be provided to the user during channel changing so that the display unit 66 can display the extracted additional information. The memory 74 comprises a read only memory (ROM) or random access memory (RAM), etc. The memory 74 stores a control program for executing various control functions and data necessary for performing a control operation. In particular, the memory 74 can store the additional information in accordance with the embodiment of the present invention.

A terminal having the above-described components receives the transport streams shown in FIGS. 1A and 1B, and processes additional information. This process will be described below.

The additional information is extracted from a broadcast signal by the controller 72 and the extracted additional information is stored in the memory 74. When a request for a channel changing operation is present, the stored additional information is provided to the user until another channel program data is completely deinterleaved and decoded. That is, this embodiment of the present invention transmits additional information when the channel program data is transmitted. At this point, the receiver extracts additional information regardless of currently displayed broadcast data and stores the extracted additional information in the memory 74. The additional information is displayed during the channel changing period when the request for the channel changing operation is present. While the user views another channel program, additional information is newly transmitted along with broadcast data. The controller 72 extracts the newly transmitted additional information and stores the extracted additional information in the memory 74. The additional information stored at the time of receiving the previous channel program is deleted, and the new additional information is stored. Thus, there is an advantage in that the memory 74 does not need to be overly used when the additional information is utilized and special additional information for each broadcast program can be effectively provided. However, when the user desires to separately store each piece of additional information during a predetermined time, the separately stored additional information can be provided in response to the user's input. For example, the additional information can be an advertisement and public announcement, etc. When the user views a music video broadcast program, an advertisement relating to the broadcast music video program can be displayed during the channel changing period when the request for the channel changing operation is present. As described above, a broadcasting service provider can periodically transmit a variety of additional information within one program, appropriately for program content. The additional information is appropriately stored according to memory capacity. Desired information can be displayed so that the user can easily confirm the stored additional information on an item-by-item basis at the channel changing period. The embodiment of the present invention can be configured so that the user can separately view individual singer information when he or she desires to view the individual singer information where songs of many singers are broadcast through a music video broadcast channel. According to an analysis of the user's habit, the user usually confirms only brief content after the channel changing operation and then performs a request for another channel changing operation. Since the additional information is not sufficiently transmitted, it may not be sufficiently displayed during the channel changing period. The user views display data separately stored in the memory 74 at the channel changing period.

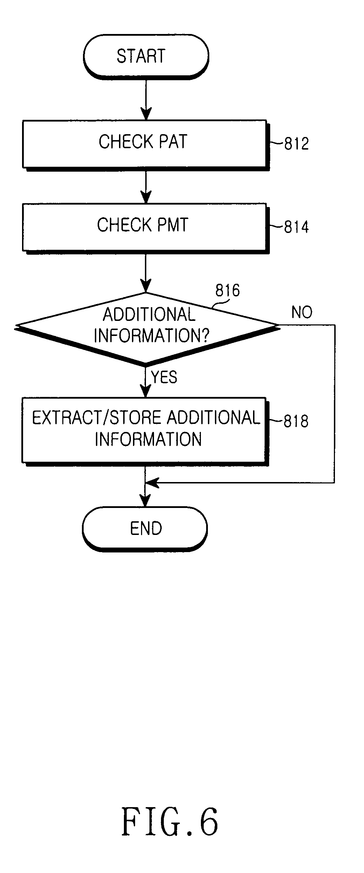

FIG. 6 is a flow chart illustrating a method for enabling the digital multimedia broadcasting receiver to receive and store additional information along with a broadcast program in accordance with the first embodiment of the present invention.

At step 812, the digital multimedia broadcasting receiver receives a broadcast signal of a channel selected by the user by means of the receiver 52 and the demodulator 54 and corrects a transmission error by means of the FEC decoding part 56 to output a transport stream. The demultiplexer 58 extracts a program map table of a program that is requested by the user, using a program association table transmitted through the common channel. Then, the demultiplexer 58 provides the extracted PMT to the controller 72.

At step 814, the controller 72 obtains packet identification numbers of video, audio and text data of the requested program from the PMT, and provides the PID numbers to the demultiplexer 58. The demultiplexer 58 separates transport stream packets corresponding to the PIDs received from the controller 72, and provides the separated transport stream packets to the respective decoders. The respective decoders decode compressed data so that the decoded compressed data can be output through the display unit 66 and the speaker 76.

At step 816, the controller 72 determines, from the PMT, whether additional information is present. If the additional information is present as a result of the determination, the controller 72 extracts the additional information demultiplexed by the demultiplexer 58 and then stores the extracted additional information in the memory 74 at step 818.

The following will be described with reference to FIGS. 1A and 1B. Assuming that a program selected by the user is Prog 1, the PID number "15" of the PMT corresponding to the Prog 1 of the PAT having the PID number "0" shown in FIG. 1A is detected. Furthermore, the PID numbers "51", "64", "10", "11", "17" and "21" corresponding to video data, audio data, text data, video-related additional information, audio-related additional information and text-related additional information are detected from the PMT having the PID number "15" shown in FIG. 1B.

If it is determined, at step 816, that no additional information is present, a termination operation is performed.

The advertisements for sponsors associated with a specified drama program can be transmitted as the additional information. When the user performs a channel changing operation from a channel A to a channel B while he or she views the drama program of the channel A, the user views the advertisements for the sponsors associated with the specified drama program, previously received while viewing the drama program, during channel changing period until the program of the channel B is displayed.

In this embodiment of the present invention, it is assumed that the additional information is received and stored once. However, the additional-information transmission can be performed once or periodically according to a service provider or an implementation method. Where the additional-information transmission is periodically performed, the same additional information is not stored at the time of receiving it after the first additional information is stored. Furthermore, where different additional information is received or a correction operation is required as an error is present in the previously stored additional information, the previously stored additional information is updated so that newly received additional information can be stored.

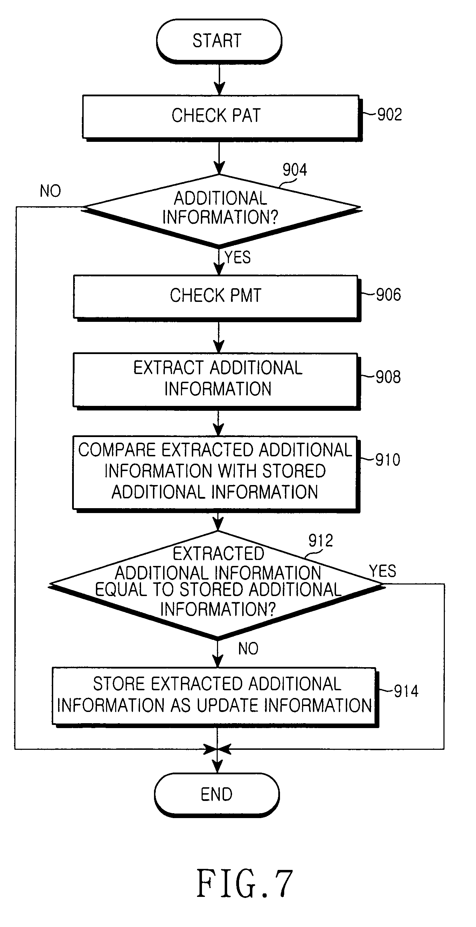

FIG. 7 is a flow chart illustrating a method for enabling the digital broadcasting receiver to receive and store additional information along with a broadcast program in accordance with the second embodiment of the present invention.

At step 902, the controller 72 checks a program association table provided from the demultiplexer 58 and extracts a packet identification number from a program map table of a program selected by the user. At step 904, the controller 72 determines whether a broadcasting station has transmitted additional information associated with the program selected by the user using the PAT. That is, the controller 72 determines whether a PID number of the PMT for the additional information associated with the program selected by the user is contained in the PAT.

When determining that the additional information is present, the controller 72 proceeds to step 906. At the above step 906, the controller 72 extracts the PID number of the PMT for the additional information from the PAT and provides the extracted PID number to the demultiplexer 58. The controller 72 checks a PMT packet and extracts PID numbers of video, audio and text data-related transport packets associated with the additional information. At step 908, the demultiplexer 58 extracts the additional information by means of the PID numbers.

Assuming that the program selected by the user is Prog 1 shown in FIG. 3, the PID number "10" of the PMT corresponding to additional information of Prog 1 is detected from the PAT having the PID number "0". Furthermore, PID numbers "9", "24" and "21" of video-related additional information, audio-related additional information and text-related additional information are detected from the PMT having the PID number "10" shown in FIG. 3. The format shown in FIG. 3 is different from the formats shown in FIGS. 1A and 1B in that a PID number corresponding to additional information of a program and the corresponding additional information are contained in the PAT and the PAT having the additional information and its PID number is transmitted.

Returning to FIG. 7, the controller 72 compares the detected additional information with additional information stored in the memory 74 at step 910. If the controller 72 determines, at step 912, that the detected additional information is equal to the stored additional information as a result of the determination, the detected additional information does not need to be stored and a termination operation is performed. When determining that the detected additional information is different from the stored additional information, the controller 72 accesses the memory 74 and stores the detected additional information as the updated additional information in the memory 74. The operation for determining whether the detected additional information is the same as the stored additional information is performed on the basis of a program name of additional information or an identifier assigned to the additional information. Because this can be easily understood by those skilled in the art, a detailed description will be omitted.

For example, "detailed guidance" information associated with a specified program can be transmitted as additional information. Assuming that the specified program is a song program in which many singers sing songs, "detailed guidance" information can be associated with a music video or concert of each singer. For example, when the user performs a channel changing operation from a channel A to a channel B associated with the song program while viewing the channel A, he or she can view the "detailed guidance (e.g., music video)" information associated with a specified singer (viewed by the user during the channel changing period) detected from the memory during the channel changing period until a program of the channel B is displayed

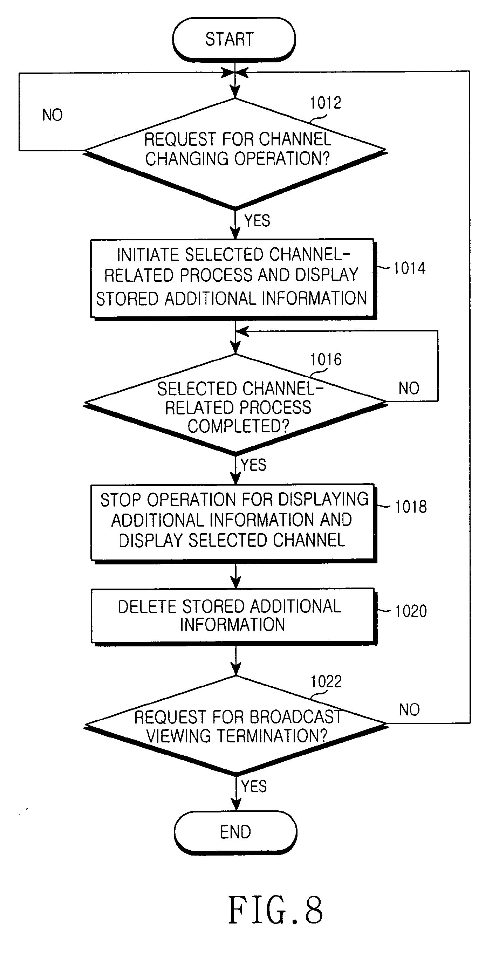

FIG. 8 is a flow chart illustrating a method for displaying additional information in accordance with an embodiment of the present invention. FIG. 8 shows the flow chart illustrating the method for performing the displaying operation so that the user can view additional information, stored through the processes shown in FIG. 6 or 7, during the channel changing period when performing the channel changing operation.

At step 1012, the controller 72 determines whether a request for a channel changing operation has been input from the user through the key input unit 70. If the request for the channel changing operation is present, the controller 72 notifies the receiver 52 and the FEC decoding part 56 of newly selected channel information so that the receiver 52 and the FEC decoding part 56 can perform related processes at step 1014. On the other hand, if no request for the channel changing operation is present, the above step 1012 is repeatedly performed. A time period required for performing the channel changing operation is the time between the start time point and an end time point when the byte interleaving operation is completed in the FEC decoding part 56. According to the implementation, a design can be changed so that the time period required for performing the channel changing operation can be the time between the start time point and an end time point when a demultiplexing operation is completed. Thus, the end time point of the channel changing operation can be easily changed according to designs.

Until a setting operation necessary for changing a channel to a new channel is completed, the controller 72 extracts additional information associated with a program before the channel changing operation and its content guidance information from the memory 74 and inputs the extracted additional information along with synchronous information to a corresponding decoder. Then, the additional information is displayed on the display unit 66 through the decoding operation. An operation for allowing the user to view the additional information is the same as that for processing a broadcast program.

At step 1016, the controller 72 determines whether the setting operation necessary for changing a channel to a selected channel has been completed. If the setting operation has been completed, the controller 72 proceeds to step 1018. At the above step 1018, the controller 72 stops an operation for displaying additional information extracted from the memory 74. Then, the controller 72 performs a control operation so that the demultiplexer 58 demultiplexes newly set channel broadcast data and the demultiplexed data can be displayed on the display unit 66 and output in an audible form through the speaker 76. If an end time point of the demultiplexing operation for the broadcast data is designated as a setting completion time point of the channel changing operation, pieces of corresponding broadcast data are input into the video and audio decoders 62 and 64 in place of additional information. Then, a program of the selected channel is displayed and simultaneously the operation for displaying the additional information during the channel changing period is stopped.

At step 1020, the controller 72 deletes the previously stored additional information from the memory 74. At step 1022, the controller 72 determines whether the user has input a request for broadcast viewing termination through the key input unit 70. If the user has input no request for broadcast viewing termination, the controller 72 returns to the above step 1012 and repeats the above-described operations. On the other hand, if the user has input the request for broadcast viewing termination, a termination operation is performed.

As described above, the embodiment of the present invention enables a service provider to provide additional information so that a profit can be generated through a new value added service. Further, the additional information can be configured by content specified by a corresponding program so that it can enhance the value of practical use of additional information. Furthermore, as the user can receive the additional information during the channel changing period, he or she will not feel frustrated while channel changing. As the channel changing period can be usefully used, its utility can be improved from the position of the user or service provider.

Although the embodiments of the present invention have been disclosed for illustrative purposes, those skilled in the art will appreciate that various modifications, additions and substitutions are possible, without departing from the scope of the invention. For example, the present invention can be configured so that a transport stream (TS) packet can be converted into a program stream (PS) packet when additional information is extracted in the form of the TS packet and the extracted additional information is stored. Therefore, the present invention is not limited to the above-described embodiments, but the present invention is defined by the claims which follow, along with their full scope of equivalents.

## Claims

1. A transport stream for providing a value added service during a channel changing period in a digital multimedia broadcasting system, comprising:
program data configured by one or more broadcast programs and additional information corresponding to the broadcast programs;
program map tables (PMTs) having detailed information of the broadcast programs and service information of the additional information corresponding to the broadcast programs; and
a program association table (PAT) having packet identifiers of the PMTs corresponding to the broadcast programs.

2. The transport stream as set forth in claim 1, wherein the program data and the PMTs are transmitted through a broadcast data channel, and the PAT is transmitted through a common channel.

3. The transport stream as set forth in claim 1, wherein the detailed information includes a packet identifier of a transport packet corresponding to video, audio or text data, and
wherein the service information of the additional information includes a packet identifier of a transport packet corresponding to video-related additional information, audio-related additional information or text-related additional information.

4. The transport stream as set forth in claim 1, wherein the channel changing period comprises a time period from when a current channel is changed to a selected channel and at least one of audio, video, and text associated with the selected channel is processed.

5. The transport stream as set forth in claim 1, wherein the PAT and the PMTs are transmitted through a broadcast channel.

6. A transport stream for providing a value added service during a channel changing period in a digital multimedia broadcasting system, comprising:
additional information corresponding to one or more broadcast programs;
a first program map table (PMT) having detailed information of the broadcast programs;
a second PMT having service information of the additional information; and
a program association table (PAT) having packet identifiers of the first and second PMTs.

7. The transport stream as set forth in claim 6, wherein a packet of the transport stream includes a packet header, and an adaptation field for a peripheral device or payload.

8. The transport stream as set forth in claim 7, wherein the packet header includes a packet identifier, the packet identifier indicating a broadcasting station generating data and a type of program associated with at least one of video, audio and text data.

9. The transport stream as set forth in claim 6, wherein the detailed information includes a packet identifier of a transport packet corresponding to at least one of video, audio and text data, and
wherein the service information of the additional information includes a packet identifier of a transport packet corresponding to at least one of video-related additional information, audio-related additional information and text-related additional information.

10. The transport stream as set forth in claim 9, wherein the PMT corresponding to at least one of the video-related additional information, the audio-related additional information and the text-related additional information is transmitted through a common channel.

11. The transport stream as set forth in claim 6, wherein the PAT and the second PMT are transmitted through a common channel, and wherein the first PMT is transmitted through a broadcast channel.

12. The transport stream as set forth in claim 11, wherein the additional information is transmitted through the common channel.

13. The transport stream as set forth in claim 6, wherein the PAT and the PMTs are transmitted through a broadcast channel.

14. The transport stream as set forth in claim 6, wherein the channel changing period comprises a time period from when a current channel is changed to a selected channel and at least one of audio, video, and text associated with the selected channel is processed.

15. A digital multimedia broadcasting receiver equipped with a display unit for receiving and displaying a broadcast, comprising:
means for detecting service information of additional information from a received broadcast signal;
a memory for storing the additional information according to the detected service information;
user input means for allowing an input request for a channel changing operation; and
a controller for recognizing the request for the channel changing operation, and displaying on the display unit the additional information stored in the memory until the channel changing operation is complete.

16. The digital multimedia broadcasting receiver as set forth in claim 15, wherein the additional information is detailed guidance information associated with content of a corresponding program.

17. The digital multimedia broadcasting receiver as set forth in claim 16, wherein the user input means comprises a key input unit.

18. The digital multimedia broadcasting receiver as set forth in claim 15, wherein the broadcast signal includes a program association table (PAT) and program map tables (PMTs) in the form of transport stream packets,
wherein the PAT includes packet identifiers of the PMTs corresponding to one or more broadcast programs, and
wherein the PMTs corresponding to the broadcast programs include packet identifiers corresponding to detailed information of the broadcast programs and service information of additional information associated with the broadcast programs.

19. The digital multimedia broadcasting receiver as set forth in claim 15, wherein the broadcast signal includes a program association table (PAT) and program map tables (PMTs) in the form of transport stream packets,
wherein the PAT includes a packet identifier of a PMT corresponding to at least one broadcast program and a packet identifier of a PMT corresponding to the additional information, and
wherein the PMT corresponding to the broadcast program includes packet identifiers corresponding to detailed information of a corresponding program and service information of additional information associated with the broadcast program.

20. The digital multimedia broadcasting receiver as set forth in claim 19, wherein the controller detects, from the PAT, a packet identifier of a PMT associated with a desired program for viewing and a packet identifier of a PMT associated with additional information corresponding to the desired program, and
wherein the digital multimedia broadcasting receiver further comprises:
a demultiplexer for extracting the PMTs using the packet identifiers detected by the controller and transferring the extracted PMTs to the controller.

21. The digital multimedia broadcasting receiver as set forth in claim 19, further comprising:
a demultiplexer for extracting, from the PAT, a PMT of a desired program for viewing and transferring the extracted PMT to the controller, and
wherein the controller detects a packet identifier of video, audio or text data associated with the desired program and a packet identifier of video-related additional information, audio-related additional information or text-related additional information, and transfers the detected packet identifiers to the demultiplexer.

22. A method for processing additional information so that a receiver performs a value added service during a channel changing period in a digital multimedia broadcasting system, comprising the steps of:
receiving a broadcast signal;
checking a program association table (PAT) from the received broadcast signal, recognizing a packet identification (PID) number of a packet map table (PMT) corresponding to a program of a selected channel, and detecting the PMT corresponding to the PID number;
determining whether service information of additional information is present in the detected PMT; and
if the service information of additional information is present, extracting the additional information from the received broadcast signal, and storing the extracted additional information.

23. The method as set forth in claim 22, wherein the service information of additional information comprises at least one of a PID number of video-related additional information, audio-related additional information and text-related additional information associated with a desired program for viewing.

24. The method as set forth in claim 22, wherein the channel changing period comprises a time period from when a current channel is changed to a selected channel and at least one of audio, video, and text associated with the selected channel is processed.

25. A method for processing additional information so that a receiver performs a value added service during a channel changing period in a digital multimedia broadcasting system, comprising the steps of:
receiving a broadcast signal;
checking a program association table (PAT) from the received broadcast signal, and determining whether additional information associated with a program of a selected channel is present;
if it is determined that the additional information is present, recognizing a packet identification (PID) number of a program map table (PMT) corresponding to service information of the additional information associated with the program and detecting the PMT corresponding to the PID number;
recognizing a PID number of at least one of video-related additional information, audio-related additional information and text-related additional information from the detected PMT and extracting the additional information from the received broadcast signal; and
storing the extracted additional information.

26. The method as set forth in claim 25, further comprising the steps of:
comparing the extracted additional information with stored additional information; and
if the extracted additional information is different from the stored additional information, storing the extracted additional information as update information.

27. The method as set forth in claim 25, wherein the service information of the additional information includes the PID number of at least one of the video-related additional information, audio-related additional information or text-related additional information associated with a desired program for viewing.

28. The method as set forth in claim 26, wherein the service information of the additional information includes the PID number of at least one of the video-related additional information, audio-related additional information or text-related additional information associated with a desired program for viewing.

29. The method as set forth in claim 25, wherein the channel changing period comprises a time period from when a current channel is changed to a selected channel and at least one of audio, video, and text associated with the selected channel is processed.

30. A method for providing a value added service in a receiver provided in a digital multimedia broadcasting system that extracts additional information from a received broadcast signal and stores the extracted additional information in a memory provided in the system, comprising the steps of:
determining whether an input request for a channel changing operation has occurred;
if the input request for the channel changing operation has occurred, initiating the channel changing operation to a selected channel and displaying the stored additional information; and
determining whether the channel changing operation to the selected channel has been completed, and stopping the displaying of the additional information if the channel changing operation has been completed.

31. The method as set forth in claim 30, further comprising the step of:
displaying the selected channel after stopping the displaying of the additional information.

32. The method as set forth in claim 30, further comprising the step of:
deleting the stored additional information after stopping the operation for displaying the additional information.

33. The method as set forth in claim 31, further comprising the step of:
deleting the stored additional information after stopping the operation for displaying the additional information.

34. The method as set forth in claim 30, wherein service information of the additional information includes a packet identifier of at least one of video-related additional information, audio-related additional information or text-related additional information associated with a desired program for viewing.

35. The method as set forth in claim 31, wherein service information of the additional information includes a packet identifier of at least one of video-related additional information, audio-related additional information or text-related additional information associated with a desired program for viewing.

36. A method for performing a value added service during a channel changing period in a receiver provided in a digital multimedia broadcasting system, comprising the steps of:
receiving a broadcast signal;
checking a program association table (PAT) from the received broadcast signal, recognizing a packet identification (PID) number of a packet map table (PMT) corresponding to a program of a selected channel, and detecting the PMT corresponding to the PID number;
determining whether service information of additional information is present in the detected PMT;
if the service information of the additional information is present, extracting the additional information from the received broadcast signal, and storing the extracted additional information;
after the storing, determining whether an input request for a channel changing operation has occurred; and
if the input request for the channel changing operation has occurred, initiating the channel changing operation to the selected channel and displaying the stored additional information.

37. The method as set forth in claim 36, wherein the channel changing period comprises a time period from when a current channel is changed to the selected channel and at least one of audio, video, and text associated with the selected channel is processed.

38. A method for processing additional information so that a receiver performs a value added service during a channel changing period in a digital multimedia broadcasting system, comprising the steps of:
receiving a broadcast signal;
checking a program association table (PAT) from the received broadcast signal, and determining whether additional information associated with a program of a selected channel is present;
if it is determined that the additional information is present, recognizing a packet identification (PID) number of a program map table (PMT) corresponding to service information of the additional information of the program and detecting the PMT corresponding to the PID number;
recognizing a PID number of video-related additional information, audio-related additional information or text-related additional information from the detected PMT and extracting the additional information from the received broadcast signal;
storing the extracted additional information;
after the storing, determining whether an input request for a channel changing operation occurred; and
if the input request for the channel changing operation occurred, initiating the channel changing operation to a selected channel and displaying the stored additional information.

39. The method as set forth in claim 38, further comprising the steps of:
comparing the extracted additional information with the stored additional information; and
if the extracted additional information is different from the stored additional information, storing the extracted additional information as update information.

40. The method as set forth in claim 38, wherein the channel changing period comprises a time period from when a current channel is changed to the selected channel and at least one of audio, video, and text associated with the selected channel is processed.

41. An apparatus for providing a value added service during a channel changing period in a digital multimedia broadcasting system, comprising:
means for transmitting a program association table (PAT) having packet identification (PID) numbers of program map tables (PMTs) corresponding to one or more programs through a common channel in the form of a packet; and
means for transmitting a PMT, video, audio or text data of a corresponding program and additional information associated with the corresponding program through a broadcast channel in the form of packets,
wherein the PAT includes a PID number of at least one of video, audio and text data of the program and a PID number of the additional information associated with the program to be transmitted through the broadcast channel.

42. The apparatus as set forth in claim 41, wherein the channel changing period comprises a time period from when a current channel is changed to a selected channel and at least one of audio, video, and text associated with the selected channel is processed.

43. An apparatus for providing a value added service during a channel changing period in a digital multimedia broadcasting system, comprising:
means for transmitting a program association table (PAT) having packet identification (PID) numbers of program map tables (PMTs) corresponding to one or more programs and PID numbers of PMTs corresponding to additional information of the programs; the PMTs corresponding to the additional information of the programs; and at least one of video-related additional information, audio-related additional information and text-related additional information, through a common channel in the form of packets; and
means for transmitting at least one of video, audio and text data of a corresponding program through a broadcast channel in the form of a packet.

44. The apparatus as set forth in claim 43, wherein the channel changing period comprises a time period from when a current channel is changed to a selected channel and at least one of audio, video, and text associated with the selected channel is processed.
